# EUROPEAN PATENT SPECIFICATION

(11) **EP 2 202 352 B1**
(45) Date of publication and mention of the grant of the patent: **10.08.2016**
(21) Application number: 08835424.6
(22) Date of filing: 03.10.2008
(51) Int. Cl.: D06M 15/564, B32B 27/12, B32B 27/40, D06N 3/14, B32B 5/02, B32B 5/08, B32B 27/36

(54) **CLOTH WATERPROOFED WITH VEGETABLE COMPONENT**
MIT EINEM PFLANZENBESTANDTEIL IMPRÄGNIERTER STOFF
TISSU HYDROFUGÉ AVEC UN COMPOSANT VÉGÉTAL

(30) Priority: 05.10.2007 JP 2007261654
(43) Date of publication of application: 30.06.2010
(73) Proprietor: Toray Industries, Inc., Tokyo, 103-8666 (JP); Toray Coatex Co., Ltd., Kyoto 601-8324 (JP)
(72) Inventor: KAWAKAMI, Kiyoshi, Kyoto-shi Kyoto 601-8324 (JP); OSUMI, Toru, Kyoto-shi Kyoto 601-8324 (JP); UEMOTO, Masanori, Kyoto-shi Kyoto 601-8324 (JP); NISHIMURA, Naotaka, Kyoto-shi Kyoto 601-8324 (JP); KOUKETSU, Takayuki, Kyoto-shi Kyoto 601-8324 (JP)
(74) Representative: Treeby, Philip David William
(86) International application number: PCT/JP2008/068082
(87) International publication number: WO 2009/044875

(56) References cited:
- EP-A1- 1 283 295
- EP-A1- 1 873 177
- GB-A- 1 414 961
- JP-A- 11 131 373
- JP-A- 2005 306 892

## Description

### TECHNICAL FIELD

The present invention relates to a waterproof cloth, and more specifically it relates to a waterproof cloth exhibiting comfort capable of being favorably used for sporting clothing, particularly outdoor sporting clothing, rainwear, and the like, and relates to a waterproof cloth containing a plant-derived component contributing to carbon neutral for reducing the environmental load in the countermeasures against global warming in recent years.

### BACKGROUND ART

With respect to a waterproof cloth containing a plant-derived component, for example, Patent Document 1 discloses a porous waterproof cloth having good biodegradability using a polylactic acid resin as a plant-derived component.

However, a conventional waterproof cloth having good biodegradability is apprehended to suffer a problem in durability upon practical use when the cloth is applied to sporting clothing, rainwear and the like. Specifically, currently available ordinary polylactic acid resin fibers are difficult to maintain the strength even in a hydrolyzability evaluation test (70°C x 95%RH) for one week, and thus it is the current situation that they are not used in a purpose where durability is required. Accordingly, a porous waterproof cloth having good biodegradability using a polylactic acid resin as a plant-derived component is difficult to be subjected to practical use.
Patent Document 1: jp-a-2002-20530

EP 1,873,177 discloses an isocyanate-terminated urethane prepolymer, process for producing the same, and adhesive comprising the urethane prepolymer. It is an object of the present invention to provide an isocyanate group-terminated urethane prepolymer which has a low viscosity at melting and a process for producing the same, and an adhesive which comprises the urethane prepolymer and has such good workability that the adhesive in a molten state can be easily applied to substrates.; The invention relates to a process for producing an isocyanate group-terminated urethane prepolymer which comprises reacting a polyol with a polyisocyanate compound, wherein the polyols comprise 10 to 60% by mass of a polyester polyol and 90 to 40% by mass of a polycarbonate polyol and a sebacic acid-derived polyester polyol which is a polycondensate of sebacic acid with a diol compound accounts for 50 to 100% by mass of the polyester polyol and wherein the polyisocyanate compound and the polyols are reacted in such amounts that the ratio (by mol) of the isocyanate group/hydroxyl group is 1.2 to 3.2. The invention further relates to an adhesive which comprises the isocyanate group-terminated urethane prepolymer as a main component.

GB 1,414,961 discloses a Porous polyurethane coated material having a Poromeric laminar material is produced by applying to one side of a foraminous lamina a first substance which is such as to render the lamina impervious to the second hereinafter defined substance, applying to the other side of the lamina a second substance which comprises a polyol and a polyisocyanate having dispersed therein a finely divided solid substance that is soluble in water or organic solvent, then curing the second substance comprising the polyol and polyisocyanate from which the dispersed substance is then removed by a solvent extraction step or steps which have no destructive effect on the physical structure of the cured derivative of the polyol and polyisocyanate which cured derivative is rendered poromeric by such removal, and removing the first substance. The dispersed particulate material may be a salt which is removed by washing with a solvent. The first substance and the salt may be removed by the same solvent in one washing operation. The polyol may be castor oil, or a blown castor oil optionally containing ethyl cellulose. The polyisocyanate may be tolylene diisocyanate. The salt may be sodium chloride. Some of the salt may be replaced by a porous precipitated silica. In a specific embodiment of the process the first substance is sodium carboxymethyl cellulose applied in aqueous solution to one side of the lamina, the lamina then being dried and coated on the other side with a substance comprising 336 parts by weight blown castor oil, 16.7 parts by weight low viscosity ethyl cellulose, 56 parts by weight sodium chloride, 7 parts by weight finely divided precipitated silica, 10 parts by weight inert pigment and 77 parts tolylene diisocyanate, the coated lamina then being heated to cure, and the sodium carboxymethyl cellulose and sodium chloride removed by washing with water. Other examples of salts are sodium sulphate and magnesium sulphate. Organic compounds including polymers may also be used as the dispersable material. Other suitable first substances are starch, gelatine, casein, methyl cellulose, methylethyl cellulose, sodium carboxy-methyl cellulose, methyl hydroxypropyl cellulose, sodium alginate and polyvinyl alcohol, polyvinyl acetate, cellulose acetate, polystyrene. The first substance may be removed by a solution in one solvent and the dispersed material of the second substance may be removed by solution in a different solvent. The applied second substance may be partially cured before applying one or more further coatings with partial curing after each coating and finally curing the whole plurality of coatings. The substrate may be fabric, natural and/or synthetic fibrous material or mixtures thereof, non-woven, e.g. felted fabrics which may be treated prior to coating by at least one of the following treatments, scouring, desizing, bleaching, singeing, dyeing, pigment padding, rot-proofing, cupra-ammonium proofing, mercerising. The substrates may be of cotton, nylon, polyethylene terephthalate, cotton spun over a continuous polyethylene terephthalate filament. The surfaces of the coated substrates may be further coated with a silicone polymer with release properties or may be lightly dusted with finely divided precipitated silica, or may be given a thin coating of a polyurethane lacquer. For use as a shoe upper material the substrate is preferably a two-way stretch fabric

### DISCLOSURE OF THE INVENTION

### PROBLEMS TO BE SOLVED BY THE INVENTION

The invention is to solve the problem in durability against hydrolysis, which cannot be solved only by a plant-derived component, such as a polylactic acid resin, and to provide a waterproof cloth exhibiting comfort.

### MEANS FOR SOLVING THE PROBLEMS

As a result of earnest investigations made by the inventors, it has been found that the problems are solved by providing a polyurethane resin film containing from 10 to 65% by weight of a plant-derived component on one surface of a cloth by a coating method or a joining method, and thus the invention has been completed.

According to the present invention there is provided a waterproof cloth comprising a cloth having formed on one surface thereof by a coating method or a joining method a waterproof layer containing a polyurethane resin film containing from 10 to 65% by weight of a plant-derived component, wherein the polyurethane resin comprises a castor oil diol as a polyol component, the castor oil diol being a castor oil series polyetherpolyester diol having an average hydroxyl group number of from 1.8 to 2.1 and a hydroxyl group value of from 41 to 85 mgKOH/g, the polyurethane resin film is a finely porous film which is obtained by dissolving the polyurethane resin in a polar solvent that is soluble in water and being wet-coagulated, and the waterproof cloth has a withstand water pressure of 10 kPa or more and a moisture permeability of 104 g/m²·hr or more according to the A-1 method of JIS L1099

The waterproof layer may contain a finely porous film containing a polyurethane resin containing from 10 to 65% by weight of a plant-derived component and a non-porous film having moisture permeability containing a polyurethane resin containing from 10 to 65% by weight of a plant-derived component laminated on each other.

Furthermore, it preferably has durability that provides a maintenance ratio of withstand water pressure of 80% or more after lapsing 3 weeks in a hydrolyzability evaluation test under conditions of a temperature of 70°C and a humidity of 95%RH.

### ADVANTAGES OF THE INVENTION

The waterproof cloth of the invention exhibits comfort capable of being favorably used for outdoor sporting clothing, rainwear, and the like. It also contributes, owing to the use of the plant-derived component, to carbon neutral for reducing the environmental load in the countermeasures against global warming.

By using mainly a castor oil diol as a polyol component of the polyurethane resin, the durability, which is a problem in a biodegradable plant-derived component resin, such as a polylactic acid resin, can be improved, and thus such durability is achieved that is equivalent to or higher than polyester polyurethane containing a petroleum component in a hydrolyzability evaluation test (70°C x 95%RH).

### PREFERRED EMBODIMENTS OF THE PRESENT INVENTION

The waterproof cloth of the invention, as described above, has a waterproof layer formed with a polyurethane resin containing a plant-derived component on one surface by a coating method or a joining method. The invention will be described in detail below.

### 1. Cloth

As the cloth used in the waterproof cloth of the invention, one suitable for a purpose may be appropriately used, the material of which is not particularly limited, and examples thereof include synthetic fibers, such as nylon fibers, polyester fibers and polyamide fibers; semi-synthetic fibers, such as acetate fibers; and natural fibers, such as cotton, hemp and wool. These kinds of fibers may be used solely or as a mixture of two or more kinds of them. The texture thereof is also not particularly limited, and a woven fabric, a knitted fabric, a nonwoven fabric and the like may be appropriately used.

### 2. Waterproof Layer

As the polyurethane resin containing from 10 to 65% by weight of a plant-derived component for forming the waterproof layer, one synthesized by using a plant-derived component, such as a divalent plant-derived polyol, as the polyol component is preferably used.

As the divalent plant-derived polyol, a castor oil diol is preferably used since a polyurethane resin excellent in hydrolyzability can be obtained.

Castor oil mainly contains a triglyceride of ricinoleic acid represented by the following formula:

5

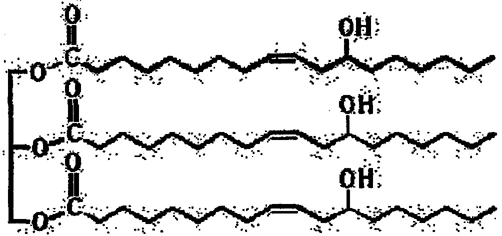

Ricinoleic acid is a compound having the structure represented by the following formula:

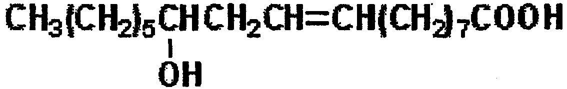

The castor oil diol referred in the invention is a diol derived from castor oil. Particularly, a castor oil series polyetherpolyester diol having an average hydroxyl group number of from 1.8 to 2.1 and a hydroxyl group value of from 41 to 85 mgKOH/g is preferred, and one having an average hydroxyl group number of from 1.95 to 2.05 is particularly preferably used. When the hydroxyl group number exceeds 2.1, a polyurethane resin that is suitable for a coating operation for forming a resin film may be difficultly obtained since a branched or crosslinked structure is formed due to a trivalent polyol. In other words, the urethane resin used in the invention preferably has a linear structure with less branched or crosslinked structure, and preferably provides a viscosity of a solution capable of being coated on a cloth. Increase of a branched structure provides an increased viscosity, which is not suitable for a coating operation. A crosslinked structure causes change in viscosity only with a slight amount thereof, and large viscosity change occurs with a small amount thereof. When the crosslinking amount is further increased, an urethane resin solution may not be obtained.

The ratio of the plant-derived component in the polyurethane resin is preferably as large as possible from the standpoint of reduction of the environmental load, but for enhancing the capability of the polyurethane resin film to provide the waterproof cloth as an object of the invention, the lower limit thereof is 10% by weight, whereas the upper limit thereof is 65% by weight. It is more preferably from 25 to 65% by weight from the standpoint of reduction of the environmental load.

### 3. Characteristics and Production Method of Waterproof Cloth

The waterproof cloth of the invention preferably has a withstand water pressure of 10 kPa or more from the standpoint of practical waterproofing.

Furthermore, the maintenance ratio of durability is preferably 80% or more after lapsing 3 weeks in a hydrolyzability evaluation test (jungle test at 70°C x 95%RH) from the standpoint of practical durability.

In the invention, the polyetherpolyester polyol derived from castor oil is used as the divalent polyol as a raw material of the polyurethane as described above, whereby the maintenance ratio of withstand water pressure of the waterproof cloth can be 80% or more after lapsing 3 weeks in the hydrolyzability evaluation test. Furthermore, a waterproof cloth having significant durability with a maintenance ratio of withstand water pressure of 50% or more after lapsing 15 weeks, which is 5 times the case where an ordinary polyester polyol is used, is obtained.

The waterproof cloth of the invention preferably has a moisture permeability of 104 g/m²· hr or more according to the A-1 method or 104 g/m²·hr or more according to the B-1 method.

Moisture permeability can be imparted to the polyurethane resin film containing a plant-derived component by making the polyurethane resin into a finely porous film by a wet method. Furthermore, for imparting moisture permeability to a non-porous film, for example, a polyol containing polyethylene glycol is copolymerized in the polymerization of the polyurethane resin containing a plant-derived component, and a resin film is formed by a dry method.

The non-porous film having moisture permeability may be laminated on the finely porous film, thereby providing higher withstand water pressure and moisture permeability.

As a method for providing the polyurethane resin containing a plant-derived component, for example, such a method may be employed that a divalent plant-derived polyol, such as castor oil diol, is dissolved in a polar solvent, such as dimethylformamide (DMF) and dimethylsulfoxide (DMSO), or a solvent, such as methyl ethyl ketone (MEK), toluene and xylene, to which a divalent isocyanate (such as hexamethylene diisocyanate, isophorone diisocyanate, diphenylmethane diisocyanate (MDI) and hydrogenated MDI) is added and sufficiently reacted to prepare a prepolymer having isocyanate groups or hydroxyl groups at the end thereof, and then a diol (such as a petroleum-derived material, e.g., ethylene glycol, propylene glycol and butylene glycol, and a plant-derived material, e.g., 1,3-propanediol and 1,2-hexanediol) or a divalent isocyanate (such as hexamethylene diisocyanate, isophorone diisocyanate, diphenylmethane diisocyanate (MDI) and hydrogenated MDI) is added thereto, thereby increasing the polymerization degree through chain extending reaction. However, the synthesis method of the polyurethane resin used in the invention is not limited to the aforementioned method.

Upon forming the prepolymer through reaction of the divalent plant-derived polyol and the divalent isocyanate, other polyol than the divalent plant-derived polyol, for example, a polyester polyol or a polyether polyol, may be copolymerized therewith. More specifically, a divalent petroleum-derived polyol, such as polyethylene adipate, polybutylene adipate, polycaprolactonediol, polyethylene glycol, polypropylene glycol and a polytetramethylene glycol, may be copolymerized. In alternative, a polycarbonate polyol, a silicone polyol, a fluorine polyol, a polyamide polyol or the like may be used for copolymerization. The polyols other than the plant-derived polyol may be mixed at a ratio of 50% by weight or less (solid content ratio) based on the total amount of the polyols, and the mixed amount is desirably 25% by weight or less (solid content ratio) for preventing the ratio of the plant-derived polyol from being decreased.

As the production method of the waterproof cloth of the invention, the method of laminating the waterproof layer of the polyurethane film containing a plant-derived component on a cloth includes a method of coating directly on the cloth (coating method) and a method of forming the waterproof layer solely and then laminating it on the cloth with an adhesive (joining method).

In the coating method, various kinds of coating methods, such as knife coating, knife-over-roll coating and reverse roll coating, may be employed.

As the joining method, for example, such a method may be employed that the waterproof layer formed on releasing paper by coating or the like operation is laminated on the cloth with an adhesive in a dot form or on the whole surface, and then the releasing paper is removed, but the invention is not limited to the method.

Examples of a preferred embodiment of a method for laminating the waterproof layer having moisture permeability include the following methods.
(1) A polyurethane resin solution containing a polyurethane resin containing a plant-derived component dissolved in a polar solvent that is soluble in water (represented by dimethylformamide (DMF) and dimethylsulfoxide (DMSO)) is coated on a cloth, and wet-gelled in water or an aqueous solution containing the polar solvent, thereby forming a finely porous film having both moisture permeability and waterproofness.
(2) A polyurethane resin containing a plant-derived component is copolymerized with a polyol containing polyethylene glycol to form a moisture permeable polyurethane resin, and a polyurethane resin solution containing the resin dissolved in a solvent capable of dissolving the resin is coated on a cloth, followed by drying the solvent, thereby forming a nonporous film having both moisture permeability and waterproofness.

### EXAMPLE

The invention will be described in more detail with reference to examples below, but the invention is not limited to the following examples. The measurement methods of capabilities in the present specification including the following examples were as follows.

### Measurement Methods

(1) Withstand water pressure: Measured according to JIS L1092.
(2) Moisture permeability: Measured according to the A-1 method and the B-1 method of JIS L1099.
(3) Hydrolyzability evaluation test (jungle test): Hydrolysis was accelerated in a high humidity thermostatic chamber at 70°C and a relative humidity of 95%, and a maintenance ratio of withstand water pressure (i.e., a ratio of the withstand water pressure after the test with respect to the withstand water pressure before the test) was measured.
(4) Boiling test in 5% NaOH aqueous solution: A film was immersed in a solution in a boiling state (approximately 100°C) in a stainless steel vat heated with an electromagnetic induction heater, and was observed for occurrence of dissolution, and the lapse of time was evaluated in terms of minute.

### Plant-derived Polyurethane 25% Solution 1

25 g of castor oil diol 1 (PH-5002, produced by Itoh Oil Chemicals Co., Ltd., average hydroxyl group number: 2.03, hydroxyl group value: 43 mgKOH/g), 25 g of castor oil diol 2 (H-56, produced by Itoh Oil Chemicals Co., Ltd., average hydroxyl group number: 2.03, hydroxyl group value: 83 mgKOH/g), 50 g of polybutylene adipate (Nippollan (registered trademark) N-4060, produced by Nippon Polyurethane Industry Co., Ltd.) and 250 g of dimethylformamide (hereinafter abbreviated as DMF) were dissolved in a 1-L separable flask, to which 56.1 g of diphenylmethane diisocyanate (hereinafter abbreviated as MDI) was added under controlling the temperature to 45°C, followed by reacting at 45°C for approximately 1 hour, thereby forming a prepolymer. Thereafter, the temperature was increased to 60°C, 10.7 g of ethylene glycol was added to perform chain extending reaction at 60°C, and polymerization was performed by adding 250 g of DMF in installments corresponding to increase in viscosity. The polymerization was completed after approximately 6 to 8 hours, and a polyurethane resin 25% solution having a plant-derived component ratio of 30.0% by weight (solid content ratio) was obtained.

### Plant-derived Polyurethane 25% Solution 2

40 g of castor oil diol 1 (PH-5002, produced by Itoh Oil Chemicals Co., Ltd., average hydroxyl group number: 2.03, hydroxyl group value: 43 mgKOH/g), 40 g of castor oil diol 2 (H-56, produced by Itoh Oil Chemicals Co., Ltd., average hydroxyl group number: 2.03, hydroxyl group value: 83 mgKOH/g), 20 g of polybutylene adipate (Nippollan (registered trademark) N-4060, produced by Nippon Polyurethane Industry Co., Ltd.) and 250 g of DMF were dissolved in a 1-L separable flask, to which 57.6 g of MDI was added under controlling the temperature to 45°C, followed by reacting at 45°C for approximately 1 hour, thereby forming a prepolymer. Thereafter, the temperature was increased to 60°C, 10. 9 g of ethylene glycol was added to perform chain extending reaction at 60°C, and polymerization was performed by adding 256 g of DMF in installments corresponding to increase in viscosity. The polymerization was completed after approximately 6 to 8 hours, and a polyurethane resin 25% solution having a plant-derived component ratio of 47.5% by weight (solid content ratio) was obtained.

### Plant-derived Polyurethane 25% Solution 3

50 g of castor oil diol 1 (PH-5002, produced by Itoh Oil Chemicals Co., Ltd., average hydroxyl group number: 2.03, hydroxyl group value: 43 mgKOH/g), 50 g of castor oil diol 2 (H-56, produced by Itoh Oil Chemicals Co., Ltd., average hydroxyl group number: 2.03, hydroxyl group value: 83 mgKOH/g) and 250 g of DMF were dissolved in a 1-L separable flask, to which 58. 6 g of MDI was added under controlling the temperature to 45°C, followed by reacting at 45°C for approximately 1 hour, thereby forming a prepolymer. Thereafter, the temperature was increased to 60°C, 10. 9 g of ethylene glycol was added to perform chain extending reaction at 60°C, and polymerization was performed by adding 259 g of DMF in installments corresponding to increase in viscosity. The polymerization was completed after approximately 6 to 8 hours, and a polyurethane resin 25% solution having a plant-derived component ratio of 58.9% by weight (solid content ratio) was obtained.

### Plant-derived Polyurethane 25% Solution 4

70 g of castor oil diol 1 (PH-5002, produced by Itoh Oil Chemicals Co., Ltd., average hydroxyl group number: 2.03, hydroxyl group value: 43 mgKOH/g), 70 g of castor oil diol 2 (H-56, produced by Itoh Oil Chemicals Co., Ltd., average hydroxyl group number: 2.03, hydroxyl group value: 83 mgKOH/g) and 300 g of DMF were dissolved in a 1-L separable flask, to which 58.6 g of MDI was added under controlling the temperature to 45°C, followed by reacting at 45°C for approximately 1 hour, thereby forming a prepolymer. Thereafter, the temperature was increased to 60°C, 9.0 g of ethylene glycol was added to perform chain extending reaction at 60°C, and polymerization was performed by adding 323 g of DMF in installments corresponding to increase in viscosity. The polymerization was completed after approximately 6 to 8 hours, and a polyurethane resin 25% solution having a plant-derived component ratio of 67.4% by weight (solid content ratio) was obtained.

### Plant-derived Polyurethane 25% Solution 5

110 g of castor oil diol 1 (PH-5002, produced by Itoh Oil Chemicals Co., Ltd., average hydroxyl group number: 2.03, hydroxyl group value: 43 mgKOH/g) and 340 g of DMF were dissolved in a 1-L separable flask, to which 58.6 g of MDI was added under controlling the temperature to 45°C, followed by reacting at 45°C for approximately 1 hour, thereby forming a prepolymer. Thereafter, the temperature was increased to 60°C, 5.0 g of ethylene glycol was added to perform chain extending reaction at 60°C, and polymerization was performed by adding 340 g of DMF in installments corresponding to increase in viscosity. The polymerization was completed after approximately 6 to 8 hours, and a polyurethane resin 25% solution having a plant-derived component ratio of 77.6% by weight (solid content ratio) was obtained.

### Petroleum-derived Polyurethane 25% Solution

100 g of polybutylene adipate (Nippollan (registered trademark) N-4060, produced by Nippon Polyurethane Industry Co., Ltd.) and 250 g of DMF were dissolved in a 1-L separable flask, to which 53.6 g of MDI was added under controlling the temperature to 45°C, followed by reacting at 45°C for approximately 1 hour, thereby forming a prepolymer. Thereafter, the temperature was increased to 60°C, 10.2 g of ethylene glycol was added to perform chain extending reaction at 60°C, and polymerization was performed by adding 241 g of DMF in installments corresponding to increase in viscosity. The polymerization was completed after approximately 6 to 8 hours, and a petroleum-derived polyurethane resin 25% solution was obtained.

### Example 1

Nylon ripstop taffeta constituted by a 50 denier nylon filament yarn was subjected to a water repelling treatment by immersing in a 30 g/L diluted solution of a fluorine water repellent agent (Unidyne (registered trademark) TG-571, produced by Daikin Industries, Ltd.), squeezing with a mangle to a squeezing ratio of 40%, drying at 120°C, and heat-treating at 130°C for 30 seconds.

3.5 parts by weight of silica fine powder (Sylysia 350, produced by Fuji Silysia Chemical, Ltd.) was added to 150 parts by weight of the plant-derived polyurethane 25% solution 1, which were sufficiently immersed in 25 parts by weight of DMF and dispersed and agitated with a homomixer for approximately 15 minutes, to which 1 part by weight of fluorine water repellent agent (Daiaromer FF-121D, produced by Dainichiseika Color & Chemicals Mfg. Co. , Ltd.), 2 parts by weight of a pigment (DILAC (registered trademark) WHITE L 7551, produced by Dainippon Ink & Chemicals, Inc.) and 1 part by weight of a crosslinking agent (Coronate (registered trademark) HL, produced by Nippon Polyurethane Industry Co., Ltd.) were added and agitated, thereby providing a polyurethane resin mixed solution having a plant-derived component ratio of 26.1% by weight (solid content ratio).

The solution was coated on the water repellent nylon ripstop taffeta with a knife-over-roll coater to a coated amount of 150 g/m², which was immersed in a bath having an aqueous solution containing 15% by weight of DMF as a gelling bath at 30°C for 2 minutes to wet-coagulate the polyurethane resin mixed coating solution, and then rinsed with warmed water at 80°C for 10 minutes and dried with hot air at 140°C, thereby providing a waterproof cloth having a plant-derived component ratio of 26.1% by weight (solid content ratio in the laminated resin layer). The resulting cloth was measured for withstand water pressure and moisture permeability.

The cloth was subjected to a jungle test and then measured for withstand water pressure, and the maintenance ratio thereof was obtained.

The boiling test in a 5% NaOH aqueous solution was performed in such a manner that the polyurethane resin mixed solution was coated on a polyester film with a knife-over-roll coater to a coated amount of 360 g/m², which was immersed in a bath having an aqueous solution containing 15% by weight of DMF as a gelling bath at 30°C for 2 minutes to wet-coagulate the polyurethane resin mixed coating solution, and then rinsed with warmed water at 80°C for 10 minutes and dried with hot air at 140°C, thereby providing a wet-processed porous film having a plant-derived component ratio of 24.5% (solid content ratio). The results are shown in Table 1.

### Example 2

Nylon ripstop taffeta constituted by a 50 denier nylon filament yarn was subjected to a water repelling treatment by immersing in a 30 g/L diluted solution of a fluorine water repellent agent (Unidyne (registered trademark) TG-571, produced by Daikin Industries, Ltd.), squeezing with a mangle to a squeezing ratio of 40%, drying at 120°C, and heat-treating at 130°C for 30 seconds.

3.5 parts by weight of silica fine powder (Sylysia 350, produced by Fuji Silysia Chemical, Ltd.) was added to 150 parts by weight of the plant-derived polyurethane 25% solution 2, which were sufficiently immersed in 25 parts by weight of DMF and dispersed and agitated with a homomixer for approximately 15 minutes, to which 1 part by weight of fluorine water repellent agent (Daiaromer FF-121D, produced by Dainichiseika Color & Chemicals Mfg. Co. , Ltd.), 2 parts by weight of a pigment (DILAC (registered trademark) WHITE L 7551, produced by Dainippon Ink & Chemicals, Inc.) and 1 part by weight of a crosslinking agent (Coronate (registered trademark) HL, produced by Nippon Polyurethane Industry Co., Ltd.) were added and agitated, thereby providing a polyurethane resin mixed solution having a plant-derived component ratio of 41.3% by weight (solid content ratio).

The solution was coated on the water repellent nylon ripstop taffeta with a knife-over-roll coater to a coated amount of 150 g/m², which was immersed in a bath having an aqueous solution containing 15% by weight of DMF as a gelling bath at 30°C for 2 minutes to wet-coagulate the polyurethane resin mixed coating solution, and then rinsed with warmed water at 80°C for 10 minutes and dried with hot air at 140°C, thereby providing a waterproof cloth having a plant-derived component ratio of 41.3% by weight (solid content ratio in the laminated resin layer). The resulting cloth was measured for withstand water pressure and moisture permeability.

The cloth was subjected to a jungle test and then measured for withstand water pressure, and the maintenance ratio thereof was obtained.

The boiling test in a 5% NaOH aqueous solution was performed in such a manner that the polyurethane resin mixed solution was coated on a polyester film with a knife-over-roll coater to a coated amount of 360 g/m², which was immersed in a bath having an aqueous solution containing 15% by weight of DMF as a gelling bath at 30°C for 2 minutes to wet-coagulate the polyurethane resin mixed coating solution, and then rinsed with warmed water at 80°C for 10 minutes and dried with hot air at 140°C, thereby providing a wet-processed porous film having a plant-derived component ratio of 41.3% by weight (solid content ratio). The results are shown in Table 1.

### Example 3

Nylon ripstop taffeta constituted by a 50 denier nylon filament yarn was subjected to a water repelling treatment by immersing in a 30 g/L diluted solution of a fluorine water repellent agent (Unidyne (registered trademark) TG-571, produced by Daikin Industries, Ltd.), squeezing with a mangle to a squeezing ratio of 40%, drying at 120°C, and heat-treating at 130°C for 30 seconds.

3.5 parts by weight of silica fine powder (Sylysia 350, produced by Fuji Silysia Chemical, Ltd.) was added to 150 parts by weight of the plant-derived polyurethane 25% solution 3, which were sufficiently immersed in 25 parts by weight of DMF and dispersed and agitated with a homomixer for approximately 15 minutes, to which 1 part by weight of fluorine water repellent agent (Daiaromer FF-121D, produced by Dainichiseika Color & Chemicals Mfg. Co., Ltd.), 2 parts by weight of a pigment (DILAC (registered trademark) WHITE L 7551, produced by Dainippon Ink & Chemicals, Inc.) and 1 part by weight of a crosslinking agent (Coronate (registered trademark) HL, produced by Nippon Polyurethane Industry Co., Ltd.) were added and agitated, thereby providing a polyurethane resin mixed solution having a plant-derived component ratio of 51.2% by weight (solid content ratio in the laminated resin layer).

The solution was coated on the water repellent nylon ripstop taffeta with a knife-over-roll coater to a coated amount of 150 g/m², which was immersed in a bath having an aqueous solution containing 15% by weight of DMF as a gelling bath at 30°C for 2 minutes to wet-coagulate the polyurethane resin mixed coating solution, and then rinsed with warmed water at 80°C for 10 minutes and dried with hot air at 140°C, thereby providing a waterproof cloth having a plant-derived component ratio of 51.2% (solid content ratio). The resulting cloth was measured for withstand water pressure and moisture permeability.

The cloth was subjected to a jungle test and then measured for withstand water pressure, and the maintenance ratio thereof was obtained.

The boiling test in a 5% NaOH aqueous solution was performed in such a manner that the polyurethane resin mixed solution was coated on a polyester film with a knife-over-roll coater to a coated amount of 360 g/m², which was immersed in a bath having an aqueous solution containing 15% by weight of DMF as a gelling bath at 30°C for 2 minutes to wet-coagulate the polyurethane resin mixed coating solution, and then rinsed with warmed water at 80°C for 10 minutes and dried with hot air at 140°C, thereby providing a wet-processed porous film having a plant-derived component ratio of 51.2% by weight (solid content ratio). The results are shown in Table 1.

### Example 4

A moisture permeable polyurethane resin solution containing 100 parts by weight of a moisture permeable polyurethane resin (HI-MUREN Y-237, produced by Dainichiseika Color & Chemicals Mfg. Co., Ltd.) mixed with 100 parts by weight of MEK was coated on the resin surface of the waterproof cloth having a plant-derived component ratio of 51.2% by weight (solid content ratio in the laminated resin layer) obtained in Example 3 by floating knife coating to a coated amount of 24 g/m², thereby providing a waterproof cloth having a top coating having a plant-derived component ratio of 45.4% by weight (solid content ratio in the laminated resin layer).

The cloth was subjected to a jungle test and then measured for withstand water pressure, and the maintenance ratio thereof was obtained.

The boiling test in a 5% NaOH aqueous solution was performed in such a manner that the polyurethane resin mixed solution was coated on a polyester film with a knife-over-roll coater to a coated amount of 360 g/m², which was immersed in a bath having an aqueous solution containing 15% by weight of DMF as a gelling bath at 30°C for 2 minutes to wet-coagulate the polyurethane resin mixed coating solution, and then rinsed with warmed water at 80°C for 10 minutes and dried with hot air at 140°C, thereby providing a wet-processed porous film having a plant-derived component ratio of 48.1% by weight (solid content ratio). The results are shown in Table 1.

### Example 5

Nylon ripstop taffeta constituted by a 50 denier nylon filament yarn was subjected to a water repelling treatment by immersing in a 30 g/L diluted solution of a fluorine water repellent agent (Unidyne (registered trademark) TG-571, produced by Daikin Industries, Ltd.), squeezing with a mangle to a squeezing ratio of 40%, drying at 120°C, and heat-treating at 130°C for 30 seconds.

3.5 parts by weight of silica fine powder (Sylysia 350, produced by Fuji Silysia Chemical, Ltd.) was added to 150 parts by weight of the plant-derived polyurethane 25% solution 4, which were sufficiently immersed in 25 parts by weight of DMF and dispersed and agitated with a homomixer for approximately 15 minutes, to which 1 part by weight of fluorine water repellent agent (Daiaromer FF-121D, produced by Dainichiseika Color & Chemicals Mfg. Co., Ltd.), 2 parts by weight of a pigment (DILAC (registered trademark) WHITE L 7551, produced by Dainippon Ink & Chemicals, Inc.) and 1 part by weight of a crosslinking agent (Coronate (registered trademark) HL, produced by Nippon Polyurethane Industry Co. , Ltd.) were added and agitated, thereby providing a polyurethane resin mixed solution having a plant-derived component ratio of 58.7% by weight (solid content ratio).

The solution was coated on the water repellent nylon ripstop taffeta with a knife-over-roll coater to a coated amount of 150 g/m², which was immersed in a bath having an aqueous solution containing 15% by weight of DMF as a gelling bath at 30°C for 2 minutes to wet-coagulate the polyurethane resin mixed coating solution, and then rinsed with warmed water at 80°C for 10 minutes and dried with hot air at 140°C, thereby providing a waterproof cloth having a plant-derived component ratio of 58.7% by weight (solid content ratio in the laminated resin layer). The resulting cloth was measured for withstand water pressure and moisture permeability.

The cloth was subjected to a jungle test and then measured for withstand water pressure, and the maintenance ratio thereof was obtained.

The boiling test in a 5% NaOH aqueous solution was performed in such a manner that the polyurethane resin mixed solution was coated on a polyester film with a knife-over-roll coater to a coated amount of 360 g/m², which was immersed in a bath having an aqueous solution containing 15% by weight of DMF as a gelling bath at 30°C for 2 minutes to wet-coagulate the polyurethane resin mixed coating solution, and then rinsed with warmed water at 80°C for 10 minutes and dried with hot air at 140°C, thereby providing a wet-processed porous film having a plant-derived component ratio of 58.7% by weight (solid content ratio). The results are shown in Table 1.

### Comparative Example 1

Nylon ripstop taffeta constituted by a 50 denier nylon filament yarn was subjected to a water repelling treatment by immersing in a 30 g/L diluted solution of a fluorine water repellent agent (Unidyne TG-571, produced by Daikin Industries, Ltd.), squeezing with a mangle to a squeezing ratio of 40%, drying at 120°C, and heat-treating at 130°C for 30 seconds.

3.5 parts by weight of silica fine powder (Sylysia 350, produced by Fuji Silysia Chemical, Ltd.) was added to 150 parts by weight of the petroleum-derived polyurethane 25% solution , which were sufficiently immersed in 25 parts by weight of DMF and dispersed and agitated with a homomixer for approximately 15 minutes, to which 1 part by weight of fluorine water repellent agent (Daiaromer FF-121D, produced by Dainichiseika Color & Chemicals Mfg. Co., Ltd.), 2 parts by weight of a pigment (DILAC (registered trademark) WHITE L 7551, produced by Dainippon Ink & Chemicals, Inc.) and 1 part by weight of a crosslinking agent (Coronate (registered trademark) HL, produced by Nippon Polyurethane Industry Co., Ltd.) were added and agitated, thereby providing a polyurethane resin mixed solution having a plant-derived component ratio of 0% by weight (solid content ratio).

The solution was coated on the water repellent nylon ripstop taffeta with a knife-over-roll coater to a coated amount of 150 g/m², which was immersed in a bath having an aqueous solution containing 15% by weight of DMF as a gelling bath at 30°C for 2 minutes to wet-coagulate the polyurethane resin mixed coating solution, and then rinsed with warmed water at 80°C for 10 minutes and dried with hot air at 140°C, thereby providing a waterproof cloth having a plant-derived component ratio of 0% by weight (solid content ratio in the laminated resin layer). The resulting cloth was measured for withstand water pressure and moisture permeability.

The cloth was subjected to a jungle test and then measured for withstand water pressure, and the maintenance ratio thereof was obtained.

The boiling test in a 5% NaOH aqueous solution was performed in such a manner that the polyurethane resin mixed solution was coated on a polyester film with a knife-over-roll coater to a coated amount of 360 g/m², which was immersed in a bath having an aqueous solution containing 15% by weight of DMF as a gelling bath at 30°C for 2 minutes to wet-coagulate the polyurethane resin mixed coating solution, and then rinsed with warmed water at 80°C for 10 minutes and dried with hot air at 140°C, thereby providing a wet-processed porous film having a plant-derived component ratio of 0% by weight (solid content ratio). The results are shown in Table 1.

### Comparative Example 2

Nylon ripstop taffeta constituted by a 50 denier nylon filament yarn was subjected to a water repelling treatment by immersing in a 30 g/L diluted solution of a fluorine water repellent agent (Unidyne TG-571, produced by Daikin Industries, Ltd.), squeezing with a mangle to a squeezing ratio of 40%, drying at 120°C, and heat-treating at 130°C for 30 seconds.

3.5 parts by weight of silica fine powder (Sylysia 350, produced by Fuji Silysia Chemical, Ltd.) was added to 150 parts by weight of the plant-derived polyurethane 25% solution 5, which were sufficiently immersed in 25 parts by weight of DMF and dispersed and agitated with a homomixer for approximately 15 minutes, to which 1 part by weight of fluorine water repellent agent (Daiaromer FF-121D, produced by Dainichiseika Color & Chemicals Mfg. Co. , Ltd.), 2 parts by weight of a pigment (DILAC (registered trademark) WHITE L 7551, produced by Dainippon Ink & Chemicals, Inc.) and 1 part by weight of a crosslinking agent (Coronate (registered trademark) HL, produced by Nippon Polyurethane Industry Co., Ltd.) were added and agitated, thereby providing a polyurethane resin mixed solution having a plant-derived component ratio of 67.5% by weight (solid content ratio in the laminated resin layer).

The solution was coated on the water repellent nylon ripstop taffeta with a knife-over-roll coater to a coated amount of 150 g/m², which was immersed in a bath having an aqueous solution containing 15% by weight of DMF as a gelling bath at 30°C for 2 minutes to wet-coagulate the polyurethane resin mixed coating solution, and then rinsed with warmed water at 80°C for 10 minutes and dried with hot air at 140°C, thereby providing a waterproof cloth having a plant-derived component ratio of 67.5% by weight (solid content ratio). The resulting cloth was measured for withstand water pressure and moisture permeability.

The cloth was subjected to a jungle test and then measured for withstand water pressure, and the maintenance ratio thereof was obtained.

The boiling test in a 5% NaOH aqueous solution was performed in such a manner that the plant-derived polyurethane resin mixed solution was coated on a polyester film with a knife-over-roll coater to a coated amount of 360 g/m², which was immersed in a bath having an aqueous solution containing 15% by weight of DMF as a gelling bath at 30°C for 2 minutes to wet-coagulate the plant-derived polyurethane resin mixed coating solution, and then rinsed with warmed water at 80°C for 10 minutes and dried with hot air at 140°C, thereby providing a wet-processed porous film having a plant-derived component ratio of 67.5% by weight (solid content ratio). The results are shown in Table 1.

**[Table 1]**

| | | Example 1 | Example 2 | Example 3 | Example 4 | Example 5 | Comparative Example 1 | Comparative Example 2 |
|---|---|---|---|---|---|---|---|---|
| Plant-derived component ratio | % by weight | 26.1 | 41.3 | 51.2 | 45.4 | 58.7 | 0.0 | 67.5 |
| Withstand water pressure | kPa | 75 | 78 | 52 | 116 | 42 | 72 | 68 |
| Moisture permeability A-1 | g/m²·hr | 472 | 435 | 402 | 256 | 172 | 464 | 65 |
| Moisture permeability B-1 | g/m²·hr | 513 | 496 | 213 | 533 | 168 | 508 | 50 |
| Withstand water pressure after jungle test (after period shown right) (kPa)/ maintenance ratio (%) | 3 weeks | 72/96 | 73/94 | 50/96 | 109/94 | 41/98 | 52/72 | 56/82 |
| | 6 weeks | 68/91 | 70/90 | 45/87 | 101/87 | 39/93 | 28/39 | 52/76 |
| | 9 weeks | 67/89 | 69/88 | 44/85 | 98/84 | 38/90 | 5/7 | 55/81 |
| | 12 weeks | 62/73 | 61/78 | 42/81 | 80/69 | 35/83 | - | 42/62 |
| | 15 weeks | 58/77 | 54/69 | 38/73 | 84/72 | 33/79 | - | 46/68 |
| | 18 weeks | 56/75 | 56/72 | 35/67 | 78/67 | 30/71 | - | 38/56 |
| Change starting time in 5% NaOH aq boiling test | min | ≥ 120 | ≥ 120 | ≥ 120 | ≥ 120 | ≥ 120 | 25 | ≥ 120 |

It is understood from the results shown in Table 1 that the waterproof cloths of Examples according to the invention all not only have excellent moisture permeability and waterproofness, but also have significantly excellent durability, which is exhibited by a maintenance ratio of withstand water pressure of 80% or more after lapsing 3 weeks in the hydrolyzability evaluation test under conditions of a temperature of 70°C and a humidity of 95% RH and that of 60% or more after lapsing 18 weeks. On the other hand, the cloth of Comparative Example 1 using the petroleum-derived polyurethane resin and thus having a plant-derived component ratio of 0% by weight is inferior in durability and alkali resistance as compared to the cloths of Examples, and the cloth of Comparative Example 2 having a plant-derived component ratio exceeding 65% by weight has low moisture permeability and is slightly inferior in durability as compared to Examples.

### INDUSTRIAL APPLICABILITY

The waterproof cloth of the invention solves the problem in durability of the conventional biodegradable plant-derived component resin, such as a polylactic acid resin, and exhibits excellent comfort, and thus it can be favorably used for sporting clothing, particularly outdoor sporting clothing, rainwear, and the like.

## Claims

1. A waterproof cloth comprising a cloth having formed on one surface thereof by a coating method or a joining method a waterproof layer containing a polyurethane resin film containing from 10 to 65% by weight of a plant-derived component, wherein the polyurethane resin comprises a castor oil diol as a polyol component, the castor oil diol being a castor oil series polyetherpolyester diol having an average hydroxyl group number of from 1.8 to 2.1 and a hydroxyl group value of from 41 to 85 mgKOH/g, the polyurethane resin film is a finely porous film which is obtained by dissolving the polyurethane resin in a polar solvent that is soluble in water and being wet-coagulated, and the waterproof cloth has a withstand water pressure of 10 kPa or more and a moisture permeability of 104 g/m²·hr or more according to the A-1 method of JIS L1099.

2. The waterproof cloth according to claim 1, wherein the waterproof layer contains a finely porous film containing a polyurethane resin containing from 10 to 65% by weight of a plant-derived component and a non-porous film having moisture permeability containing a polyurethane resin containing from 10 to 65% by weight of a plant-derived component laminated on each other.

3. The waterproof cloth according to claim 1, wherein the waterproof cloth retains at least 80% of its withstand after a period of 3 weeks in a hydrolyzability evaluation test under conditions of a temperature of 70°C and a humidity of 95%RH.

## Patentansprüche

1. Wasserdichtes Gewebe, das ein Gewebe umfasst, auf dem auf einer Oberfläche davon durch ein Beschichtungsverfahren oder ein Verbindungsverfahren Folgendes gebildet ist: eine wasserdichte Schicht, die einen Polyurethan-Harzfilm enthält, der von 10 bis 65 Gewichts-% einer von Pflanzen stammenden Komponente enthält, wobei das Polyurethan-Harz ein Rizinusöl-Diol als Polyol-Komponente umfasst, wobei das Rizinusöl-Diol ein Polyetherpolyesterdiol der Rizinusöl-Serie ist, das eine durchschnittliche Hydroxylgruppenzahl von 1,8 bis 2,1 und einen Hydroxylgruppen-Wert von 41 bis 85 mg KOH/g aufweist, der Polyurethan-Harzfilm ein feinporöser Film ist, der durch Lösen des Polyurethan-Harzes in einem polaren Lösungsmittel, das in Wasser löslich ist, und Nasskoagulation erhalten wird, und das wasserdichte Gewebe einem Wasserdruck von 10 kPa oder mehr widersteht und eine
Feuchtigkeitsdurchlässigkeit von 104 g/m²·Std. oder mehr gemäß dem A-1-Verfahren von JIS L1099 aufweist.

2. Wasserdichtes Gewebe nach Anspruch 1, wobei die wasserdichte Schicht Folgendes enthält: einen feinporösen Film, der ein Polyurethan-Harz enthält, das von 10 bis 65 Gewichts-% einer von Pflanzen stammenden Komponente enthält, und einen nichtporösen Film, der eine Feuchtigkeitsdurchlässigkeit aufweist und ein Polyurethan-Harz enthält, das von 10 bis 65 Gewichts-% einer von Pflanzen stammenden Komponente enthält, die aufeinander beschichtet sind.

3. wasserdichtes Gewebe nach Anspruch 1, wobei das wasserdichte Gewebe mindestens 80 % seines Widerstands nach einer Zeitdauer von 3 Wochen in einer Bewertungsprüfung der Hydrolysierbarkeit unter Bedingungen einer Temperatur von 70°C und einer Luftfeuchtigkeit von 95 % RH beibehält.

## Revendications

1. Tissu imperméable à l'eau comprenant un tissu ayant, formée sur l'une des surfaces de celui-ci par une méthode de revêtement ou une méthode d'assemblage, une couche imperméable à l'eau contenant un film de résine polyuréthane contenant de 10 à 65% en poids d'un composant dérivé de plantes, où la résine polyuréthane comprend un diol d'huile de ricin comme composant de polyol, le diol d'huile de ricin étant un polyéther-polyester diol de série d'huile de ricin ayant un nombre de groupements hydroxyle moyen allant de 1,8 à 2,1 et un indice de groupement hydroxyle allant de 41 à 85 mg de KOH/g, le film de résine polyuréthane étant un film finement poreux qui est obtenu par la solubilisation de la résine polyuréthane dans un solvant polaire qui est soluble dans l'eau et étant coagulé à l'état humide, et le tissu imperméable à l'eau possède une résistance à la pression de l'eau de 10 kPa ou plus et une perméabilité à l'humidité de 104 g/m²xh ou plus selon la méthode A-1 de JIS L1099.

2. Tissu imperméable à l'eau selon la revendication 1, dans lequel la couche imperméable à l'eau contient un film finement poreux contenant une résine polyuréthane contenant de 10 à 65% en poids d'un composant dérivé de plantes et un film non poreux ayant une perméabilité à l'humidité contenant une résine polyuréthane contenant de 10 à 65% en poids d'un composant dérivé de plantes contrecollés l'un sur l'autre.

3. Tissu imperméable à l'eau selon la revendication 1, dans lequel le tissu imperméable à l'eau conserve au moins 80% de sa résistance après une période de 3 semaines dans un test d'évaluation d'aptitude à l'hydrolyse dans des conditions d'une température de 70°C et d'une humidité de 95% d'HR.
